Europäisches Patentamt

European Patent Office

Office européen des brevets

(19)

(11) **EP 1 474 747 B1**

(12) **EUROPEAN PATENT SPECIFICATION**

| | |
|---|---|
| (45) Date of publication and mention of the grant of the patent: **06.09.2006 Bulletin 2006/36** | (51) Int Cl.: **G06F 13/16** (2006.01) |
| (21) Application number: **03737393.3** | (86) International application number: **PCT/IB2003/000142** |
| (22) Date of filing: **20.01.2003** | (87) International publication number: **WO 2003/067445 (14.08.2003 Gazette 2003/33)** |

(54) **ADDRESS SPACE, BUS SYSTEM, MEMORY CONTROLLER AND DEVICE SYSTEM**

ADRESSENRAUM, BUSSYSTEM, SPEICHERUNGSSTEUERUNG UND EINRICHTUNGSSYSTEM

ESPACE D'ADRESSE, SYSTEME DE BUS, CONTROLEUR DE MEMOIRE ET SYSTEME DE DISPOSITIFS

| | |
|---|---|
| (84) Designated Contracting States:<br>**AT BE BG CH CY CZ DE DK EE ES FI FR GB GR HU IE IT LI LU MC NL PT SE SI SK TR** | (56) References cited:<br>**GB-A- 2 287 808**      **US-A- 5 754 815**<br>**US-B1- 6 188 595** |
| (30) Priority: **06.02.2002 EP 02075502** | • **SCHU M ET AL: "SYSTEM ON SILICON-IC FOR MOTION COMPENSATED SCAN RATE CONVERSION, PICTURE-IN-PICTURE PROCESSING, SPLIT SCREEN APPLICATIONS AND DISPLAY PROCESSING" IEEE TRANSACTIONS ON CONSUMER ELECTRONICS, IEEE INC. NEW YORK, US, vol. 45, no. 3, August 1999 (1999-08), pages 842-850, XP000927003 ISSN: 0098-3063 cited in the application** |
| (43) Date of publication of application:<br>**10.11.2004 Bulletin 2004/46** | |
| (73) Proprietor: **Koninklijke Philips Electronics N.V.**<br>**5621 BA Eindhoven (NL)** | |
| (72) Inventor: **JASPERS, Egbert, G., T.**<br>**NL-5656 AA Eindhoven (NL)** | |
| (74) Representative: **Eleveld, Koop Jan**<br>**Philips Intellectual Property & Standards,**<br>**P.O. Box 220**<br>**5600 AE Eindhoven (NL)** | • **B. KHAILANY, ET AL.: "Imagine: Media Processing with Streams" IEEE MICRO, [Online] 1 March 2001 (2001-03-01) - 1 April 2001 (2001-04-01), pages 35-46, XP002242404 Retrieved from the Internet: <URL:http: //www.ece.umd.edu/courses/enee75 9m.S2002/papers/khailany2001-micro21-2.pdf > [retrieved on 2003-05-21] cited in the application** |

**Description**

The invention regards an address space, a bus system, a memory controller and a device system comprising an address space, a bus system and a memory controller.

The memory capacity requirements in large systems on chip (SoC) have led to the use of DRAM based memory devices which feature a high integration density. The devices usually contain an array of dynamic cells which are accessed with a separate row and column address. Hence the access of a single word in the memory requires several memory commands, to be issued: a row address (row activate), a column address (read or write), and the pre-charge (to update the accessed row in the array). To maximize the sustained memory bandwidth, the burst access mode is provided to enable high utilization of the memory bus. When a read or write command is issued by means of a column address, a burst of data (e.g. four words) is transferred to or from the memory device. During the activation and the precharging of a row, no data can be accessed in the memory array. Therefore, several arrays of dynamic cells, called multi-banks, are integrated and can be accessed independently. During the activate- and pre-charge-time in one of the banks, another bank may be accessed thereby hiding the time in which an activated or pre-charged bank cannot be accessed.

A result of these efficiency optimizations is that data can only be accessed at the granularity of data bursts. These data bursts are located consecutive in the memory. Therefore, the burst of data can be considered as non-overlapping blocks of data in the memory that can only be accessed as an entity. The length of the burst determines the granularity of access and can be programmable. Typically this is attained at configuration time.

In the GB 2 287 808 a method of accessing a DRAM is disclosed, preparing an enable line that enables and disables reading from and writing to the DRAM a number of words that is less than a predetermined fixed burst length. However, such method may cause performance losses and needs for avoidable efforts to be realized. New generation DRAMs, like DRR2 SDRAMs, do not provide the described feature anymore, i.e. a burst cannot be interrupted anymore. Therefore, the method described in GB 2 287 808 would also be not compatible with new generation DRAMs.

US 5,754,815 discloses a method for controlling the sequence of accesses of a processor to an allocated memory that is formed by at least two individually addressable static sub-memories or, respectively, memory banks. A drive logic is inserted between the processor and, for example, two static sub-memories. The static sub-memories SRAM 0,1 and a dynamic memory DRAM together form the main memory of the microprocessor system US 5,754,815 refers to the static sub-memories SRAM 0,1. Each of the static sub-memories SRAM 0,1 is separately driven via inputs realized in conformity with the processor bus. The microprocessor system is connected via a processor bus formed by address lines to a drive logic. The outputs of the drive logic representing the processor bus are connected to the two static sub-memories SRAM 0,1. Further, the drive logic contains a clock and logic circuit. In the clock and logic circuit the processor bus is conducted to an address intermediate memory, to an address controller and to an intermediate memory controller. As shown in Fig. 2 of US 5,754,815 the address information of an address line ADL 4... n are communicated from the microprocessor and are stored in the address intermediate memory and are together with the address information of a second and a third address line ADL 2,3 formed in the address controller. These are applied to the two static sub-memories SRAM 0,1. Address information are thereby formed in the address controller for every sub-memory or, respectively, every memory bank SRAM 0,1 and are separately conducted to the two sub-memories SRAM 0,1 via the address lines ADL 2,3.

To meet high bandwidth requirements in systems on chip, memory busses become wider. A consequence of this trend is an increasing granularity of the data entity that can be accessed.

A current trend in SoC technology is directed to the embedding of DRAM onto the system chip. Example implementations of such systems are outlined in the paper of Schu M., et al., "System on silicon-IC for motion compensated scan rate conversion picture-in-picture processing, split screen applications and display processing", IEEE-Transactions-on-Consumer-Electronics (USA), vol. 45, no. 3, p. 842 - 50, Aug. 1999 and Schu M. et al., "System-on-Silicon Solution for high Quality Consumer Video Processing - The Next Generation", Digest of Technical Papers of the International Conference on Consumer Electronics, Los Angeles, Ca, USA, 19 - 21 June 2001, p. 94 - 95. Currently most systems on chip (SoC) that require of-chip-memory use SDRAM based memory devices such as single-data-rate (SDR) SDRAM, double-date-rate (DDR) SDRAM or Direct-RAMBUS (RDRAM). Such systems make use of one memory controller and an address bus common to all SDRAM memory devices of an address space connected to the common address bus.

All these types of device systems suffer from the problem that for accessing small-grain data blocks, the transfer overhead increases significantly for increasing data-burst sizes, due to an increased granularity of access alignment grid of bursts. This is in particular disadvantageous if a requested data block crosses the alignment grid of the bursts.

Some system designs try to reduce the granularity of the data burst sizes and the alignment grid by making use of several independent data busses with separate memory controllers for each memory device of an address space. Such a system is described in B. Khailany, et al., "Imagine: Media Processing with Streams", IEEE Micro, March-April 2001, pp. 35 - 46. However each memory controller of such a system can only access its own memory device of the address space, *i.e.* only a part of the complete address space. One such controller is not capable of accessing the complete address space. Therefore multiple controllers are necessary which are disadvantageous regarding costs, design and infrastructure.

This is where the invention comes in, the object of which is to specify a device system, an address space, a bus system and a memory controller capable to decrease a transfer overhead and thereby improve the available bandwidth for requested data and enable a more efficient usage of a bus system.

In accordance with the invention it is proposed a device system according to claim 1 in which the device system comprises

- a memory controller operatively connected by an address line of
- an address bus to an address space having more than one memory device set wherein the more than one device set comprises at least one memory device in form of a drum-based device and the controller provides for the more than one memory device setof an address space and single common address line and

the controller provides an address line for a memory device set the address line being applied differently to the memory device set than another address line, applied to another memory device set. Advantageously the address line is applied, in particular dedicated, separately, in particular solely to the memory device set.

The invention leads to a device system in which the device system comprises:

- a memory controller,
- an address bus, and,
- an address space

wherein the address bus is adapted to access the complete address space having more than one memory device set and adapted to access at least one memory device set differently than another memory device set, advantageously an address line of the address bus accesses separately, in particular solely the memory device set.

Preferably the address space in accordance with the invention has more than one memory device set, wherein a memory device set comprises at least one address line connector, being adapted to connect the memory device set to a memory controller, differently than another memory device is connected to a memory controller. Advantageously the address line connector is adapted to connect the memory device set separately to a memory controller, in particular solely to a memory controller.

Preferably the bus system in accordance with the invention has an address bus, wherein the address bus comprises an address line, being adapted to connect a memory device set selected from more than one memory device sets of an address space differently to a memory controller than another memory device set is connected to a memory controller.

Preferably the memory controller is for, accessing a complete address space having more than one memory device set, wherein the memory controller comprises at least one address line connector which is adapted to connect a memory device set differently by the address line connector than another memory device set is connected by another address line connector. In particular there is at least one address line, *i.e.* one or more address lines.

With regard to the invention, the term differently is referred to in the sense that at least one of the mentioned lines, in particular address lines, has a different value or quality than other lines. E.g., the value of the different applied address line may be 0 while the value the another address line is 1. Further the quality e.g. the voltage or bandwidth or other characteristics of the different applied address line, differs from that of the another address line. Thereby it is possible to have different addresses for different memory device sets. For instance, a column address may be different for each memory device set. The at least one address line must not necessarily have a different value or quality than other line but only should enable the possibility to have a different value. E.g. not all the time but once in a while, at least at the time of access to a memory device set of the address space, at least one of the address lines has a different value or quality than other lines, i.e. the controller provides an address line for a memory device set, the address line being applied differently to the memory device set than another address line is applied to another memory device set. Advantageously, this of course may be achieved if the address line is applied separately, in particular solely to the memory device set. In this sense a different applied line for a memory device set is dedicated to the memory device set.

Preferably, a memory device set consists of one single memory device but may also comprise two or more memory devices. In particular the term memory device set refers to a set of memory devices wherein all memory devices of the set are controlled in the same way and have in particular one or more address lines in common.

The term address space is referred to with regard to the invention in the sense that an address space assigns for the multitude of all memory device sets and memory devices. Also the term address space must be carefully distinguished from the total storage space of a computer. Address space does not comprise the HDD memory space of a computer.

Two configurations of a memory may serve as examples of an address space. Each configuration of an address space has a total memory data bus width of 64 bits. In the first configuration the address space consists of 4 memory device sets, each having a single memory device, each memory device having a 16 bit data bus. In the second configuration the address space consists of 8 memory device sets, each having a single memory device, each memory device having a 8 bit data bus. A memory device itself may have a capacity of, for instance, 16 megabit or 32 megabit. If the memory devices in the first and the second configuration have both the same memory capacity, then the second configuration has an address space which is twice as big as in the first configuration. This is because one has twice as much devices in the second configuration as compared to the first configuration. Consequently the address bus of the second configuration is of a width which exceeds the width of the address bus of the first configuration by one bit.

This is because the capacity of an address space is defined as the amount of different address values of an address space. For instance 10 address lines apply for a $2^{10}$ = 1024 words address space which is the total number of addresses. A word is defined as one single value on the data bus of a particular memory configurator. For instance a 32 bit data bus is adapted to transfer words of 32 bits width. So the address space of a memory system is always a multiple of words, i.e. for the above example in multiples of 32 bits.

The number of memory devices and sets of a complete address space may still vary dependent on data bus width of each memory device. For instance to provide a 64 bit data bus two memory devices of 32 bit data busses may be applied or four devices of 16 bit data busses or eight devices of 8 bit data busses or sixteen devices of 4 bit data busses. Any further number of data bus widths of memory devices may be chosen dependent on the specific application.

A bus system may provide a data bus and an address bus each comprising a number of lines. A line is referred to as an address line with regard to an address bus and referred to as a data line with regard to a data bus. A bus is meant to comprise one or several lines. A line may be connected as a single line between the controller and a single memory device set and may be split up further to connect the controller width a number of devices of a single device set to the single line. With this assumption a bus may comprise shared lines and/or different applied lines as outlined above. Shared lines are meant to connect a number of device sets simultaneously. A shared address line provides the connected device sets with the same information. It is not possible to provide different information via the shared line to the connected memory device sets. In particular a different applied address line as outlined above is suitable to address a particular device set of an address space in a different way than another device set of the address space. The different applied address line may be connected as a single line between the controller and a single memory device set and may be split up further to connect several devices of the mentioned particular device set. These several devices of the particular device set are addressed in the same common way.

The invention has arisen from the desire to propose a way to refine the alignment grid although the amount of bytes within a data burst remains equal. The main idea of the invention results from the insight, that the amount of different applied lines determines the granularity of the data entities and the amount of concurrent data entities. Therefore, it is proposed a device system, an address space, a bus system and a memory controller capable to provide for different addressing for several memory devices. Thereby, still a part of the address lines may be shared lines by all memory devices such as bank address lines. The other part of the address lines, as at least one address line, is applied differently, advantageously separately or solely to a memory device set of one or more memory devices. Preferably a plurality of address lines are provided, each of the address lines being applied differently to a respective one memory device set, i.e. the different applied address lines are dedicated. In particular, a device system is provided that features one memory controller and separate address lines of an address bus for several parallel memory devices instead of or additional to one or a number of shared address lines. Thereby the alignment grid is refined although the amount of bytes per burst remains equal. Due to the refined alignment grid, the amount of transfer overhead can be reduced significantly.

Further continued developed configurations of the invention are described in the dependent claims.

In a preferred configuration, one single memory controller is operatively connected to the complete address space. The complete address space consists of a plurality of memory device sets.

The device system may comprise an off-chip memory. Also for systems having an on-chip memory, the proposed devices are in particular advantageous, because additional costs are limited for an embedded DRAM.

In a preferred configuration, the device system comprises a processor on-chip. If the memory is on-chip a DRAM based memory is advantageous. Such configuration may be established with low costs. The DRAM based memory may only offer signals, a clock is not necessary. If the memory is off-chip a SDRAM based memory is preferred. In this case a flip-flop gated DRAM *i.e.* a SDRAM is preferred for reasons of synchronization. Further advantages are described with regard to the figures.

Further, one or more address lines common to all memory devices is advantageous, e.g. to provide a bank address line. Also a single address line is suitable for such purpose. For a memory device the controller preferably provides at least one data line, the at least one data line being dedicated separately, in particular solely, one memory device.

The proposed device system, address space, bus system or memory controller are preferably used in all systems-on-chip that require the use of off-chip or embedded DRAM based memories. These may be all media processing ICs, DSPs, CPUs etc.

Preferred embodiments of the invention will now be described with reference to the accompanying drawings.

These are meant to show examples to clarify the inventive concept in connection with the detailed description of a preferred embodiment and in comparison to prior art.

While there will be shown and described what is considered to be a preferred embodiment of the invention, it will of course be understood that various modifications and changes in form or detail could readily be made without departing from the invention. It is therefore intended that the invention may not be limited to the exact form or detail herein shown and described nor to anything less than the whole of the invention herein disclosed as herein after claimed. Further, the features described in the description and the drawings and the claims disclosing the invention, may be essential for the invention taken alone or in combination.

The drawings show in:

Fig. 1 a visualization of the transfer overhead for a requested data block from a memory in a device system of prior art;
Fig. 2 a conventional memory infrastructure in a device system suffering from a transfer overhead as described with Fig. 1;
Fig. 3 a memory infrastructure in a device system with multiple controllers as an alternative example of prior art;
Fig. 4 a memory infrastructure in a device system with both, multiple address lines applied differently to each memory device and a shared address line, and a shared controller of a preferred embodiment;
Fig. 5 a visualization of the limited transfer overhead for a requested data block from a memory in a device system of a preferred embodiment compared to a memory in a device system of prior art as shown in Fig. 1;
Fig. 6 a functional block diagram of a SDRAM memory according to a preferred embodiment.

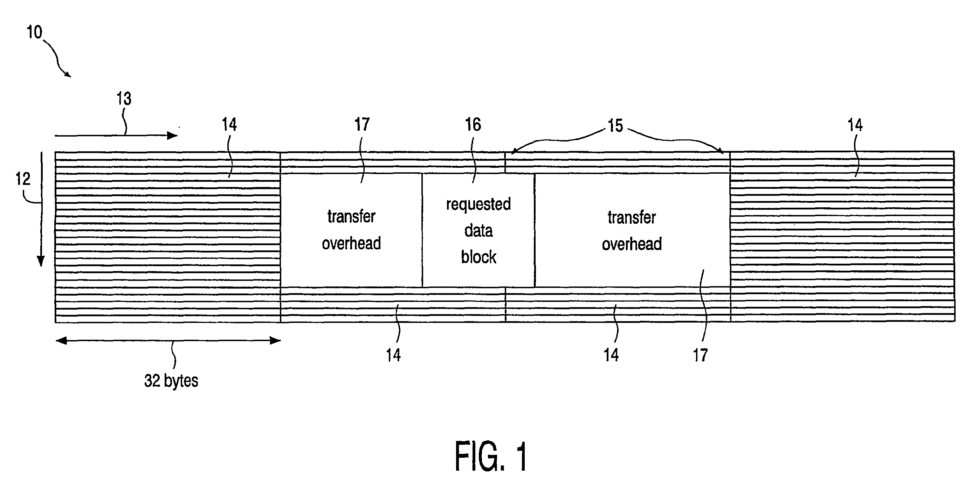

In Fig. 1, an example to indicate the length of a burst determining the granularity of access is given. For example if the burst length is "four", bursts of four words are located at memory locations that satisfy the following condition:

$$\text{column address MODULO 4 words} = 0.$$

They may be accessed anywhere in the burst. But a burst can only be accessed as an entity as will be described with regard to Table 1 further down. The size of the data burst not only depends on the burst length, but also on the width of the memory bus. For example, a burst length of "four" and a 64-bit memory bus results in data bursts of 32 bytes.

Fig. 1 shows an example of the organization of pictorial data in memory rows 12 and memory columns 13 of a memory device 10. A data entity *i.e.* a data burst 14 contains 32 bytes and is due to the alignment grid 15. To access a data block of 256 bytes (16 bytes from 16 different memory rows 12) 16 x 16 bytes are requested as a data block 16 but as a burst can only be accessed as an entity 16 x 64 bytes are accessed (4 times as much as requested) resulting in a transfer overhead 17 of 300 %. Particularly for accessing small-grain data blocks 16, the transfer overhead 17 increases significantly for increasing data-burst sizes 14. This is particular true if the requested data block 16 overlays the grid boundaries 15. Although the size of the data bursts 14 is inherent to the bus width and the burst length, part of the overhead is caused by the discrete locations of the data burst 14. Memory access can only be applied at the alignment grid 15 of the data bursts 14. For Fig. 1, the overhead 17 would only be 100 % (instead of 300 %) if the 32-byte transfers could start at the start of the requested data block 16.

To reduce the memory bandwidth, part of the transfer overhead 17 can be reused with a local cache memory by exploiting the spatial locality of data as present in e.g. CPU data, CPU instructions and streaming media data. However, also in such a system, the cache performance could improve significantly when the start location of the data burst was not necessarily aligned with the 32-byte memory grid 15. It would enable the system to capture those data in the transfer overhead 17 that have a high cache-hit potential. Although the start location of a data burst 14 at arbitrary positions in the column 13 would be optimal, any refinement in the alignment grid 15 would improve the bandwidth efficiency.

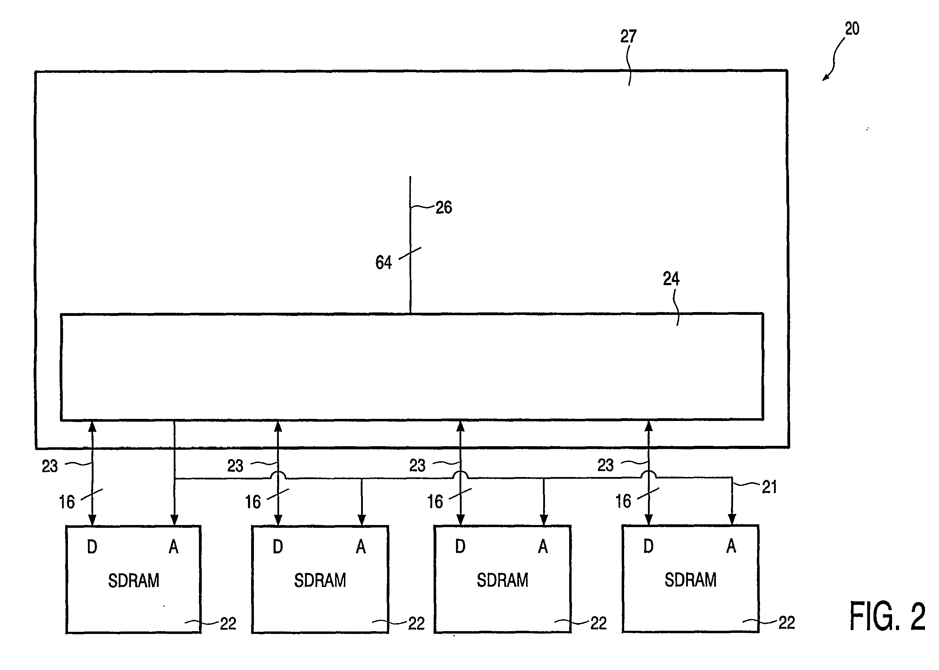

The main-stream memory devices 22, as shown in Fig. 2 may be used in a device system 20 of Fig. 2. Such memory device 22 may contain a data bus of 4, 8, or 16 bits. The data bus 23 has a 16-bit width. To create a 64-bit memory bus consisting of all data lines 23, several memory devices 22 have to be connected in parallel. Usually, they share the same address line 21. However, by having multiple address lines or busses, the devices 22 could be addressed differently while still providing the same total bandwidth. Each memory device 22 is connected with a separate data bus 23 to a memory controller 24 common to the address space of all memory devices 22. The memory controller 24 is connected by a 64-bit line 26 to the system-on-chip 27.

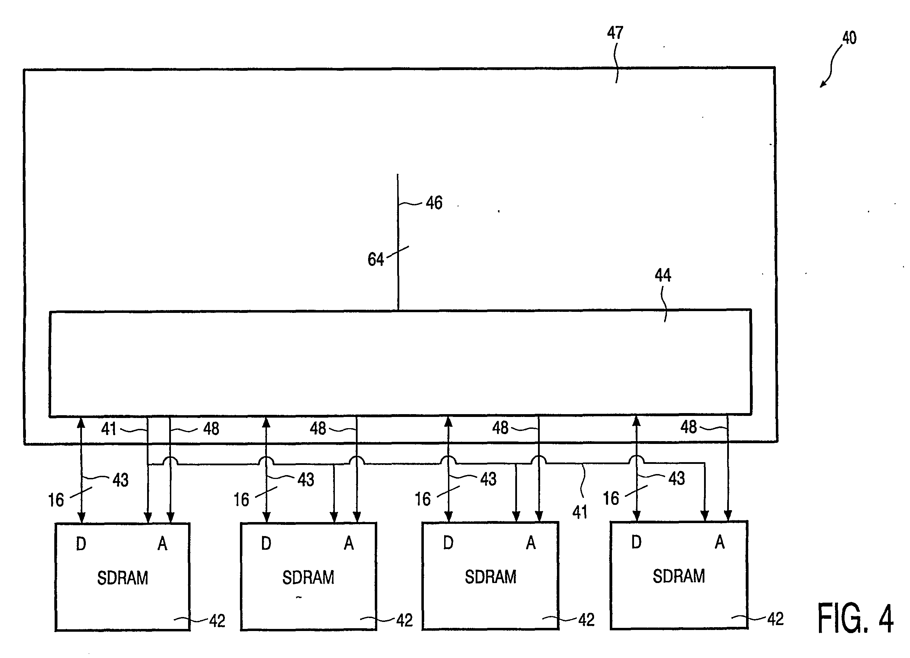

The preferred embodiment 40 of Fig. 4 provides a memory controller 44 which provides different addressing 48 and data busses 43 for several memory devices 42. Part 41 of the address bus being all address lines 41 and 48 is still shared by all memory devices 42 such as the bank address lines. The other part 48 of the mentioned address bus is dedicated, each line 48 for a single memory device set 42. In this embodiment one memory device set 42 consists of one single memory device. In a variant some or all of the address lines 48 may be operatively connected each respectively to two or more memory devices 42 establishing a memory device set. The amount of address lines 48 connected as single lines to the controller may be 2, 4, 8, etc. and is limited by the amount of memory devices. Each single line may also be replaced by a set of lines. If a 64-bit wide memory bus consisting of lines 43 is implemented with 16 x 4-bit memory devices, the lines 48 of the address bus could be copied up to 16 times. The proposal, as outlined in Fig. 4 provides more flexibility in addressing to reduce the transfer overhead and to control the memory location of the transfer overhead, in particular for improvement of cache performance. The controller 44 is connected by a 64-bit bus 46 to the system-on-chip 47. In the preferred embodiment of Fig. 4 the address space of memory devices 42 is off-chip. In a further preferred embodiment it could be on-chip as well.

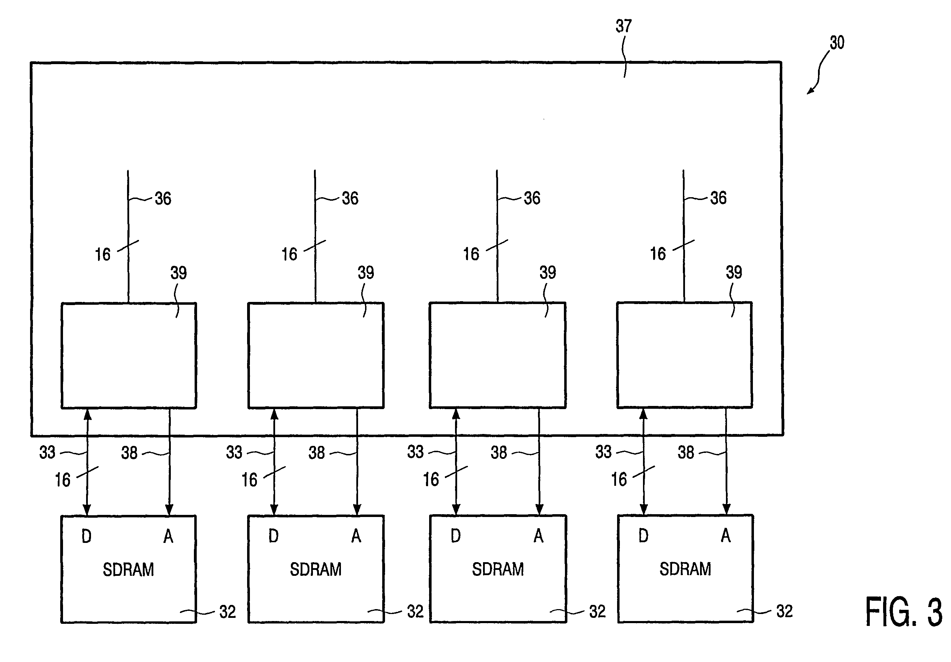

Another more straight-forward solution 30 of prior art to reduce the granularity of an alignment grid 15 is to have several independent data busses 38 with separate memory controllers 39, as shown in Fig. 3. In such system 30 of prior art, the bandwidth and the address space of memory devices 32 is divided over all memory controllers 39. This solution 30 also reduces, the granularity of the data bursts 14, however, proportionally with the amount of controllers 39. In contrast to the preferred embodiment a plurality of controllers 39 is necessary to control the entire address space of a plurality of memory devices 32. Each memory device 32 is assigned to a separate memory controller 39.

The advantage of this solution over the proposed solution 40 is that the addressing of the data entities in each memory devices is not constrained to be in the same memory bank. However, the disadvantages compared to the system 40 of Fig. 4 are more significant:

- each memory controller 39 can only access a small part 32 of the complete address space;
- multiple memory controllers 39 increase the costs of the system 30 proportionally;
- all signaling wires to issue a memory request and to handle the complete transaction need to be implemented multiple times;
- the complete memory address busses 38 is implemented multiple times, thereby increase the costs for an off-chip memory system; and
- the infrastructure 36 for the memory clients 37 of the system 30 is not compatible with the solution 20 in Fig. 2, thus all clients of the 64-bit memory controller 24 with a 64-bit data line 26 need a re-design.

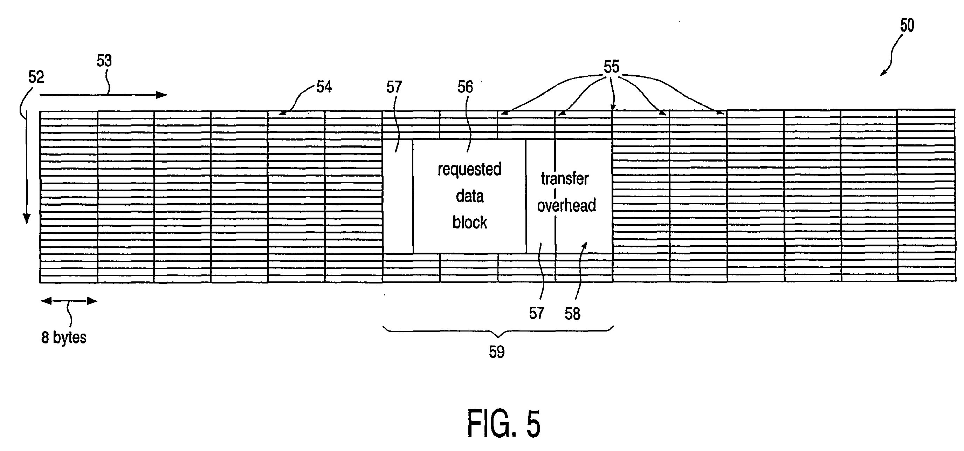

In the preferred embodiment of a memory architecture 40 in Fig. 4, the memory controller 44 abstracts the memory clients 47 from how the physical memory space 42 is configured in detail. Therefore, the infrastructure 46 of the memory clients 47 in SoC is compatible to the system 20, as shown in Fig. 2. Hence, the design of existing clients 27 of the memory controller 44 remain valid. However, the organization of the data in the memory space comprising the memory devices 42 differs as outlined in Fig. 5. Comparing Fig. 5 with Fig. 1, one can notice two differences. Due to the finer alignment grid 55, only one data burst 54 per device send per row 52 of 32 bytes in total is sufficient to access the requested data block 56 whereas two data bursts 14 per row were required in Fig. 1. Moreover, the location of a part 58 of the overhead 57 can be selected. In this case a selection can be made between the column 53 in front of the requested data block 56 or behind the requested data block 56. This flexibility can be exploited to improve the cache performance.

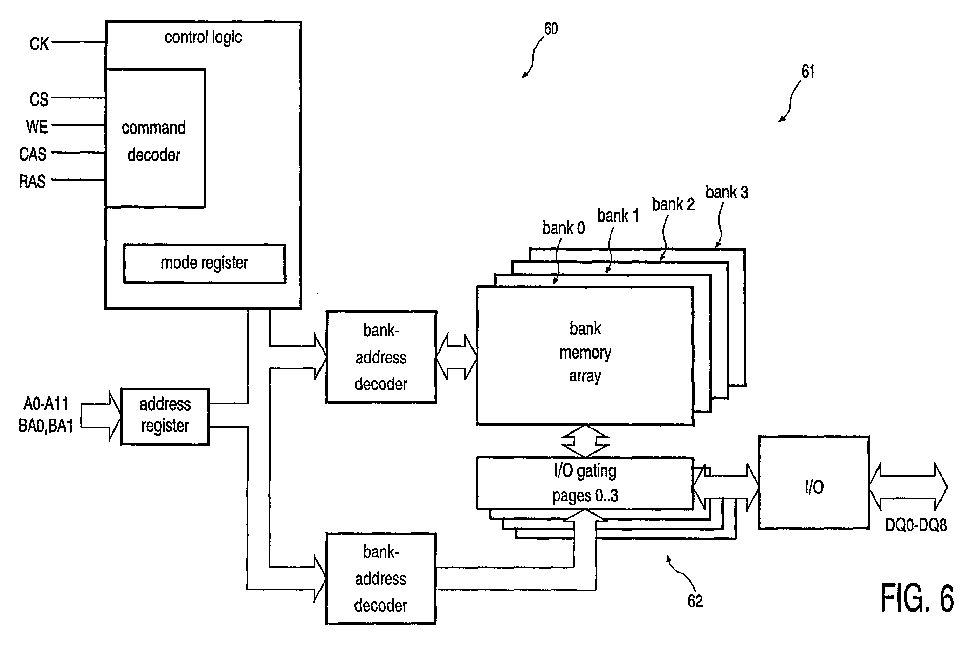

If we consider four address busses as shown in Fig. 3, a 32-byte data burst has become 4 x 8-bytes data entities 59 which are addressed concurrently. These 4 x 8-byte data entities 59 do not need to be located successively in the address space 30. This flexibility can for example be exploited for signal-processing units that simultaneously need several small data entities 54 at different location in the memory. For example, a temporal video filter that reads pixels from successive video frames in the memory. Each data entity could be located in a different video frame. There are however some constraints on the addressing of each burst, which is here a 8-byte data entity 54. Each data entity 54 has to be located in another memory device 42 and the bank address of each data entity 54 is to be equal. The latter constraints is required due to the shared bank address lines and prevents different scheduling behavior of the memory commands. Details about this issue are discussed with Fig. 6.

The use of multiple address busses 48 obviously adds cost to the design. Particularly, when the address space with memory devices 42 is located off-chip. Multiple address busses 48 require more pins on the chip device, which is more expensive in device package and increase the power. Moreover, a small part of address generation in the memory controller 44 needs multiple implementations. However, the concept does enable some significant tradeoff between flexibility in access and system costs. For example, it is possible to share a larger part of the address bus 45. For example, when the memory 42 is accessed in a more or less linear way it is sufficient to have flexible addressing of 4 x 8-byte data entities 59 within one row 52. This means that only the column address lines 53 need to be implemented multiple times. Also the part of the address generation that needs to be implemented multiple times can then be limited to the column address generator. For memory devices that for example have 256 columns within a row, only 8 address lines are implemented multiple times.

Note that the additional costs for multiple address busses are only considerable for off-chip memory, as shown in Fig. 4. For SoC with embedded DRAM on chip, the additional costs are limited.

Fig. 6 shows the functional block diagram of a SDRAM 60. The physical memory cells 61 are divided into banks 0 to 3, which are separately addressable by means of a row address 52 and column address 53. A bank 0, 1, 2 or 3 is selected by the input pins BA0 and BA1 in case of a four bank device.

Before a certain memory address in a bank can be issued, the memory row 52 in which the data is contained should be activated first. During activation of a row 52, the complete row 52 is transferred to the SDRAM page registers in the I/O gating pages 62. Now random access of the columns 53 within the pages 62 can be performed. In each bank 0, 1, 2 or 3, only one row 52 can be active simultaneously, but during the random access of the page registers within the pages 62, switching between banks 0, 1, 2 or 3 is allowed without a penalty. For each bank there is one page. Therefore, with a four bank device, four rows 52 can be addressed randomly by addressing one row 52 in each bank 0, 1, 2 and 3. During the transfer of the row data to the page register 62, the row cells in the DRAM banks are discharged. Therefore, when a new row in a bank has to be activated, the page registers should first be copied back into the DRAM before a new row activate command can be issued. This is done by means of a special precharge, also referred to as "page close", command. According to the JEDEC standard, read and write commands can be issued with an automatic precharge. Thus when the page registers 62 are closed by performing a read or write with automatic precharge for the last access in a row, no additional precharge command is needed.

In a further variant of the preferred embodiment not shown here, on the one hand, the scheduling of data may be different in different memory devices 42. Such scheduling is performed by more than one scheduler within the memory controller 44. Thereby an addressing of different columns and rows in different devices is established as the more than one scheduler is able to take care for precharge and activation and further timing constrains with regard to the addressing of different rows in different devices. Such variant of the preferred embodiment allows for more complex and more flexible addressing of the address space. On the other hand, in a further variant of the preferred embodiment 40 a single scheduler may be used within the memory controller 44 so that the addressing of rows in different devices is kept the same. Such further variant of the preferred embodiment 40 allows for automatic scheduling with regard to precharge and activation and timing constrains, of rows in different devices. Therefore, the preferred embodiment 40 allows for a simplified solution in the latter variant within which only a column generator needs to be adapted. Within the former variant of the preferred embodiment, a more flexible and complex addressing of the address space is possible.

A memory controller as proposed by the preferred embodiment, addresses for example simultaneously 4 x 8-byte data entities 54. If the memory controller would allow the flexibility to address any row 52 in any bank 0, 1, 2 or 3 for each data entity 54, the scheduling of the memory commands would differ for each memory device 42. For example, one device may successively address two different rows from the same bank. As a consequence the row activation command has to be delayed until the bank is precharged. For other memory devices subsequent row address are located in different banks and do not require a delay of the row activate command. To share most part of the memory controller 44 for all memory devices 42 the bank addresses are shared thereby guaranteeing equal memory command schedules.

The SDRAM 60 of Fig. 6 may for example be a 128 Mb DDR SDRAM attained as a high speed CMOS dynamic random access memory containing 134, 217, 728 bits. The 128 Mb DDR SDRAM is internally configured as a quad-bank DRAM as shown in Fig. 6. The 128 Mb DDR SDRAM uses a double date rate architecture to achieve high-speed operation. The double data rate architecture is essentially a 2n-prefetch architecture, with an interface designed to transfer two data words per clock cycle at the I/O pins. A single read or write access for the 128 Mb DDR SDRAM consists of a single 2n-bit wide, one-clock-cycle data transfer at the internal DRAM core and two corresponding n-bit wide, one-half-clock-cycle data transfers at the I/O pins.

Read and write accesses to the DDR SDRAM are burst oriented; accesses start at a selected location and continue for a programmed number of locations in a programmed sequence. Accesses begin with the registration of an ACTIVE command, which is then followed by a READ or WRITE command. The address bits registered coincident with the ACTIVE command are used to select the bank and row to be accessed and are transmitted by an address bus. BA0 and BA1 select the bank and A0 - A11 select the row. The address bits registered coincident with the READ or WRITE command are used to select the starting column location for the burst access. Prior to normal operation, the DDR SDRAM must be initialized. DDR SDRAMs are powered up and initialized in a predefined manner. This regards appliance of power voltages with regard to certain thresholds and time sequences.

The device operation is guided by certain definitions. The mode register is used to define the specific mode of operation of the DDR SDRAM. This definition includes the selection of a burst length, a burst type, a CAS latency and an operating mode. The mode register is programmed via the command bars which transmit commands to the command decoder within the control logic. The mode register is programmed and will retain the stored information until it is programmed again or the device looses power. Reprogramming the mode register will not alter the contents of the memory, provided it is performed correctly. The mode register must be loaded or reloaded when all banks are idle and no bursts are in progress, and the controller must wait the specified time before initiating the subsequent operation. Violating either of these requirements will result in unspecified operation.

Mode register bits A0 - A2 for instance specify the burst length, A3 specifies the type of burst e.g. sequential or interleaved, A4 - A6 specify the CAS latency and A7 - A11 specify the operating mode. In particular, the command bus transmits commands regarding the following parameters. CK (input clock) provides that all addresses and control input signals are sampled on the crossing on the positive edge of CK. CS (input chip select) enables the command decoder. All commands are masked when CS is registered HIGH. CS provides for external bank selection on systems with multiple banks. CS is considered part of the command code. When sampled at the positive rising edge of the clock RAS (row address strop), CAS (column address strop) and WE (write enable) define the operation to be executed by the SDRAM.

Further as indicated above, A0 - A11 being address inputs and BA0 - BA1 being bank selects are provided to the address register. BA0 - BA1 select which bank is to be active. During a bank activate command cycle A0 - A1 defines the row address. During a READ or WRITE comment cycle, part of the address input lines for instance A0 - A9 defines the column address. A10 is used to invoke autoprecharge operation at the end of the burst READ or WRITE cycle. During a precharge command cycle, A10 is used in conjunction with BA0, BA1 to control which bank to precharge. If A10 is high, all banks will be precharged. If A10 is low, then BA0 and BA1 are used to define which bank to precharge.

With regard to the burst length READ and WRITE accesses to the DDR SDRAM are burst oriented with the burst length being programmable. A definition of a burst within a burst programming sequence is shown in table 1. The burst length determines the maximum number of column locations that can be accessed for a given READ or WRITE command. Burst lengths of 2, 4 or 8 locations are available for both the sequential and the interleaved burst types.

Table 1. Burst definition

| Starting column address | | Order of accesses within a burst |
|---|---|---|
| A1 | A0 | |
| 0 | 1 | 0-1-2-3 |
| 0 | 1 | 1-2-3-0 |
| 1 | 0 | 2-3-0-1 |
| 1 | 1 | 3-0-1-2 |

Table 1 shows the order of accesses within the unit. Basically this means that the data burst are non-overlapping data entities in the memory. However, there is some flexibility in the order in which the words in the data entity are transferred. When a READ or WRITE command is issued, a block of columns equal to the burst length is effectively selected. All accesses for that burst take place within this block, meaning that the burst will wrap within the block if the boundary is reached. The block is uniquely selected by A1 - Ai when the burst length is set to two, by A2 - Ai when the burst length is set to four and by A3 - Ai when the burst length is set to eight (where Ai is the most significant column address bit for a given configuration). The remaining (least significant) address bits are used to select the starting location within the block. The programmed burst length applies to both, READ and WRITE bursts.

Further, a burst type may be programmed. Accesses within a given burst may be programmed to be either sequential or interleaved. This is referred to as the burst type and may be selected via a specific bit.

As outlined, to obtain a high bandwidth performance, SDRAMs provide burst access. This mode makes it possible to access a number of consecutive data words by giving only one read or write command. It is to be noted that several commands are necessary to initiate a memory access although the clock rate at the output is higher than the rate at the input, which is the command rate. To use this available output bandwidth, the read and write accesses have to be burst oriented. The length of a burst 54 is programmable and determines the maximum number of column locations 53 that can be accessed for a given READ or WRITE command. It partitions the rows 52 into successive units, equal to the burst length. When a READ or WRITE command is issued, only one of the units is addressed. The start of a burst may be located anywhere within the units, but when the end of the unit is reached, the burst is wrapped around. For example, if the burst length is "four", the two least significant column address bits select the first column to be addressed within a unit.

## Claims

1. Device system (40) comprising:

- a memory controller (44) operatively connected by an address line of an address bus to
- an address space having more than one memory device set (42) wherein the address bus is adapted to access the complete address space

**characterized in that**

- the more than one memory device set (42) comprises at least one memory device in form of a DRAM-based device, wherein
- the memory controller (44) provides for the more than one memory device set (42) of the address space one single common address line (41) and
- for accessing at least one memory device set (42) differently than another memory device set (42)

the memory controller provides an address line (48) for the memory device set (42), the address line (48) being applied differently to the memory device set (42) than another address line (48) is applied to another memory device set (42).

2. Device system (40) according to claim 1, **characterized in that** the address line (48) is applied separately, in particular solely, to the memory device set (42).

3. Device system (40) according to claim 1 or 2, **characterized in that** the memory device set (42) consists of one single memory device.

4. Device system (40) as claimed in anyone of the preceding claims, **characterized in that** one single memory controller (44) is operatively connected to the complete address space.

5. Device system (40) as claimed in anyone of the preceding claims, **characterized in that** the address space is an off-chip-memory.

6. Device system (40) as claimed in anyone of the preceding claims, **characterized by** an on-chip-processor-system.

7. Device system (40) as claimed in anyone of the preceding claims, **characterized in that** the memory device is a SDRAM-based device.

8. Device system (40) as claimed in anyone of the preceding claims, **characterized in that** the controller (44) provides a data bus having a data line (43) for a memory device set (42), the data line (43) being dedicated differently to the memory device set (43), than another data line (43).

9. Device system (40) as claimed in anyone of the preceding claims, **characterized in that** the address space has more than one memory device set (42), wherein the memory device set (42) comprises at least one address line connector, being adapted to connect the memory device set (42) to the memory controller (44) differently than the other memory device set (42) is connected to the memory controller (44).

10. Device system (40) as claimed in anyone of the preceding claims, **characterized in that** the address bus comprises an address line (48), being adapted to connect the memory device set (42), selected from more than one memory device sets (42) of an address space, differently to the memory controller (44) than the other memory device set (42) is connected to the memory controller (44).

11. Device system (40) as claimed in anyone of the preceding claims, **characterized in that** the memory controller (44) is adapted for accessing the complete address space having more than one memory device set (42), wherein the memory controller (44) comprises at least one address line connector, which is adapted to connect a memory device set (42) differently by the address line connector, than another memory device set (42) is connected by another address line connector.

**Patentansprüche**

1. Einrichtungssystem (40), das Folgendes umfasst:

- eine Speichersteuereinheit (44), operativ verbunden über eine Adressleitung von einem Adressbus mit
- einem Adressenraum mit mehr als einer Speichereinrichtungsgruppe (42), wobei der Adressenbus dafür eingerichtet ist, auf den gesamten Adressenraum zuzugreifen,

**dadurch gekennzeichnet, dass**

- die mehr als eine Einrichtungsgruppe (42) mindestens eine Speichereinrichtung in Form einer DRAM-basierenden Einrichtung umfasst, wobei
- die Steuereinheit (44) für die mehr als eine Speichereinrichtungsgruppe (42) des Adressenraums eine einzelne gemeinsame Adressenleitung (41) bereitstellt, und
- für das Zugreifen auf mindestens eine Speichereinrichtungsgruppe (42) anders als auf eine andere Speichereinrichtungsgruppe (42)

die Speichersteuereinheit eine Adressleitung (48) für die Speichereinrichtungsgruppe (42) bereitstellt, wobei die Adressleitung (48) der Speichereinrichtungsgruppe (42) anders zugeführt wird als eine andere Adressleitung (48) einer anderen Speichereinrichtungsgruppe (42) zugeführt wird.

2. Einrichtungssystem (40) nach Anspruch 1, **dadurch gekennzeichnet, dass** die Adressleitung (48) separat, insbesondere allein, der Speichereinrichtungsgruppe (42) zugeführt wird.

3. Einrichtungssystem (40) nach Anspruch 1 oder 2, **dadurch gekennzeichnet, dass** die Speichereinrichtungsgruppe (42) aus einer einzelnen Speichereinrichtung besteht.

4. Einrichtungssystem (40) nach einem der vorhergehenden Ansprüche, **dadurch gekennzeichnet, dass** die einzelne Speichersteuereinheit (44) operativ mit dem gesamten Adressenraum verbunden ist.

5. Einrichtungssystem (40) nach einem der vorhergehenden Ansprüche, **dadurch gekennzeichnet, dass** der Adressenraum ein chipexterner (Off-Chip-) Speicher ist.

6. Einrichtungssystem (40) nach einem der vorhergehenden Ansprüche, **gekennzeichnet durch** ein chipinternes (On-Chip-) Prozessorsystem.

7. Einrichtungssystem (40) nach einem der vorhergehenden Ansprüche, **dadurch gekennzeichnet, dass** die Speichereinrichtung eine SDRAM-basierende Einrichtung ist.

8. Einrichtungssystem (40) nach einem der vorhergehenden Ansprüche, **dadurch gekennzeichnet, dass** die Steuereinheit (44) einen Datenbus mit einer Datenleitung (43) für eine Speichereinrichtungsgruppe (42) bereitstellt, wobei die Datenleitung (43) anders als eine andere Datenleitung (43) der Speichereinrichtungsgruppe (42) speziell zugeordnet ist.

9. Einrichtungssystem (40) nach einem der vorhergehenden Ansprüche, **dadurch gekennzeichnet, dass** der Adressenraum mehr als eine Speichereinrichtungsgruppe (42) hat, wobei die Speichereinrichtungsgruppe (42) mindestens einen Adressleitungsverbinder hat, der dafür eingerichtet ist, die Speichereinrichtungsgruppe (42) anders mit der Speichersteuereinheit (44) zu verbinden als die andere Speichereinrichtungsgruppe (42) mit der Speichersteuereinheit (44) verbunden ist.

10. Einrichtungssystem (40) nach einem der vorhergehenden Ansprüche, **dadurch gekennzeichnet, dass** der Adressbus eine Adressleitung (48) umfasst, die dafür eingerichtet ist, die unter mehreren Speichereinrichtungsgruppen (42) eines Adressenraums ausgewählte Speichereinrichtungsgruppe (42) anders mit der Speichersteuereinheit (44) zu verbinden als eine andere Speichereinrichtungsgruppe (42) mit der Speichersteuereinheit (44) verbunden ist.

11. Einrichtungssystem (40) nach einem der vorhergehenden Ansprüche, **dadurch gekennzeichnet, dass** die Speichersteuereinheit (44) dafür eingerichtet ist, auf den gesamten Adressenraum mit mehr als einer Speichereinrichtungsgruppe (42) zuzugreifen, wobei die Speichersteuereinheit (44) mindestens einen Adressleitungsverbinder hat, der dafür eingerichtet ist, eine Speichereinrichtungsgruppe (42) anders durch den Adressleitungsverbinder zu verbinden als eine andere Speichereinrichtungsgruppe (42) durch einen anderen Adressleitungsverbinder verbunden ist.

**Revendications**

1. Système de dispositifs (40) comprenant :

   - un contrôleur de mémoire (44) connecté fonctionnellement par une ligne d'adresse d'un bus d'adresse à un espace d'adresse qui a plus d'un ensemble de dispositifs de mémoire (42), dans lequel le bus d'adresse est à même d'accéder à l'espace d'adresse complet

   **caractérisé en ce que**

   - le plus d'un ensemble de dispositifs de mémoire (42) comprend au moins un dispositif de mémoire dans la forme d'un dispositif à base de mémoire DRAM, dans lequel
   - le contrôleur de mémoire (44) procure une unique ligne d'adresse commune (41) au plus d'un ensemble de dispositifs de mémoire (42) de l'espace d'adresse et
   - pour accéder à au moins un ensemble de dispositifs de mémoire (42) différemment d'un autre ensemble de dispositifs de mémoire (42)

   le contrôleur de mémoire procure une ligne d'adresse (48) pour l'ensemble des dispositifs de mémoire (42), la ligne d'adresse (48) étant appliquée de façon différente à l'ensemble de dispositifs de mémoire (42) qu'une autre ligne d'adresse (48) est appliquée à un autre ensemble de dispositifs de mémoire (42).

2. Système de dispositifs (40) selon la revendication 1, **caractérisé en ce que** la ligne d'adresse (48) est appliquée séparément, en particulier uniquement, à l'ensemble de dispositifs de mémoire (42).

3. Système de dispositifs (40) selon les revendications 1 ou 2, **caractérisé en ce que** l'ensemble de dispositifs de mémoire (42) est constitué d'un seul dispositif de mémoire.

4. Système de dispositifs (40) selon l'une quelconque des revendications précédentes, **caractérisé en ce qu'**un unique contrôleur de mémoire (44) est connecté fonctionnellement à l'espace d'adresse complet.

5. Système de dispositifs (40) selon l'une quelconque des revendications précédentes, **caractérisé en ce que** l'espace d'adresse est une mémoire hors puce.

6. Système de dispositifs (40) selon l'une quelconque des revendications précédentes, **caractérisé par** un système de processeur sur puce.

7. Système de dispositifs (40) selon l'une quelconque des revendications précédentes, **caractérisé en ce que** le dispositif de mémoire est un dispositif à base de mémoire SDRAM.

8. Système de dispositifs (40) selon l'une quelconque des revendications précédentes, **caractérisé en ce que** le contrôleur (44) procure un bus de données qui a une ligne de données (43) pour un ensemble de dispositifs de mémoire (42), la ligne de données (43) étant dédiée différemment à l'ensemble de dispositifs de mémoire (43) qu'une autre ligne de données (43).

9. Système de dispositifs (40) selon l'une quelconque des revendications précédentes, **caractérisé en ce que** l'espace d'adresse a plus d'un ensemble de dispositifs de mémoire (42), dans lequel l'ensemble de dispositifs de mémoire (42) comprend au moins un connecteur de ligne d'adresse, étant à même de connecter l'ensemble de dispositifs de mémoire (42) au contrôleur de mémoire (44) différemment de la façon dont l'autre ensemble de dispositifs de mémoire (42) est connecté au contrôleur de mémoire (44).

10. Système de dispositifs (40) selon l'une quelconque des revendications précédentes, **caractérisé en ce que** le bus d'adresse comprend une ligne d'adresse (48), étant à même de connecter l'ensemble de dispositifs de mémoire (42) sélectionné parmi plus d'un ensemble de dispositifs de mémoire (42) d'un espace d'adresse, différemment au contrôleur de mémoire (44) de la façon dont l'autre ensemble de dispositifs de mémoire (42) est connecté au contrôleur de mémoire (44).

11. Système de dispositifs (40) selon l'une quelconque des revendications précédentes, **caractérisé en ce que** le contrôleur de mémoire (44) est à même d'accéder à l'espace d'adresse complet qui a plus d'un ensemble de dispositifs de mémoire (42), dans lequel le contrôleur de mémoire (44) comprend au moins un connecteur de ligne d'adresse qui est à même de connecter un ensemble de dispositifs de mémoire (42) par le connecteur de ligne d'adresse, différemment de la façon donc un autre ensemble du dispositif de mémoire (42) est connecté par un autre connecteur de ligne d'adresse.

EP 1 474 747 B1

10

13

13

14     17     16      15      14

12

transfer overhead

requested data block

transfer overhead

32 bytes

14       14    17

FIG. 1

FIG. 2

EP 1 474 747 B1

FIG. 3

EP 1 474 747 B1

FIG. 4

FIG. 5

EP 1 474 747 B1

FIG. 6